Europäisches Patentamt

European Patent Office

Office européen des brevets

(11) Publication number: **0 107 968**
**B1**

(12) **EUROPEAN PATENT SPECIFICATION**

(45) Date of publication of patent specification: **10.09.86**

(21) Application number: **83306495.9**

(22) Date of filing: **25.10.83**

(51) Int. Cl.⁴: **B 25 J 9/00, B 25 J 13/00, B 25 J 17/00**

(54) **Control system of multi-joint arm robot apparatus.**

(30) Priority: **29.10.82 JP 189074/82**

(43) Date of publication of application:
**09.05.84 Bulletin 84/19**

(45) Publication of the grant of the patent:
**10.09.86 Bulletin 86/37**

(84) Designated Contracting States:
**CH DE FR GB IT LI NL SE**

(56) References cited:
**EP-A-0 009 121**
**EP-A-0 077 609**
**GB-A-2 045 720**
**GB-A-2 087 107**
**US-A-4 160 508**
**US-A-4 221 997**

(73) Proprietor: **Kabushiki Kaisha Toshiba**
**72, Horikawa-cho Saiwai-ku**
**Kawasaki-shi Kanagawa-ken 210 (JP)**

(72) Inventor: **Asano, Kuniji**
**2843-5, Nozuda-cho**
**Machida-shi Tokyo (JP)**
Inventor: **Wakahara, Yasushi**
**516-15, Kishine-cho**
**Kohoku-ku Yokohama-shi (JP)**

(74) Representative: **Freed, Arthur Woolf et al**
**MARKS & CLERK 57-60 Lincoln's Inn Fields**
**London WC2A 3LS (GB)**

Courier Press, Leamington Spa, England.

## Description

The present invention relates to a multi-joint arm control system for effectively guiding a multi-joint arm robot apparatus toward a target in a narrow space to which an operator cannot gain access.

Facilities such as tower tank, nuclear reactor, fusion reactor and shielding cell in a nuclear fuel reprocessing plant have neither entrance nor space large enough to allow technical personnel to enter or work in and contain harmful radioactive rays and the like. Therefore, it is usually impossible for personnel to enter directly inside these facilities to check them or work in them. With these facilities, it is necessary that the working person be located at a safe site and remotely operate an industrial robot arranged in these facilities or be allowed into them through a small entrance to check or work in them. It is preferable that such robot is of a multi-joint arm type wherein a plurality of unit arms are coupled through joints in order to facilitate the avoidance of contact with various obstacles.

A multi-joint arm which is simple in construction and easy in control is disclosed in EP—A1— 0 077 609, published on 27.4.83. In this multi-joint arm, the angle formed by two adjacent arms connected by a joint is controlled by a motor, so that a relatively complex posture can be achieved. For this reason, this multi-joint arm has a suitable construction for avoiding obstacles, while being guided toward a target.

An object of the present invention is to provide a control system for a multi-joint arm robot apparatus which can easily and effectively guide a multi-joint arm to a goal in a narrow space.

According to the present invention, there are provided a display means for displaying, as models of three dimensional solids, a facility such as a heat exchanger tank in a nuclear apparatus which is to be inspected by the multi-joint arm robot; and a path designation means by which the operator designates the path of the multi-joint arm with reference to the three dimensional solid models (that is, environmental models) displayed on the display means. Basing on the information pertaining to the designated path, a computer calculates the joint angle of each of the joints such that the joints are brought onto the designated path when a movable support for supporting the multi-joint arm moves at fixed (regular) intervals. There is further provided a motor driver circuit for driving motors of the movable support and the unit arms in response to the computer to move the movable support at a fixed interval and drive each of the joints of the multi-joint arm to a corresponding calculated joint angle.

According to the present invention, the operator need only create solid models of the facility inside of which the multi-joint arm is to be guided, and designate the path of the multi-joint arm. Therefore, the operator needs no skill to enable the multi-joint arm to be guided to a target without coming into contact with any obstacles inside.

This invention can be more fully understood from the following detailed description when taken in conjunction with the accompanying drawings, in which:

Fig. 1 shows the overall arrangement of a multi-joint arm robot system;

Fig. 2 shows a mechanism of the multi-joint arm;

Fig. 3 shows the multi-joint arm robot being guided into the heat exchanger tank of the nuclear apparatus; and

Fig. 4 shows a control system for guiding the multi-joint arm into a facility such as the heat exchanger tank.

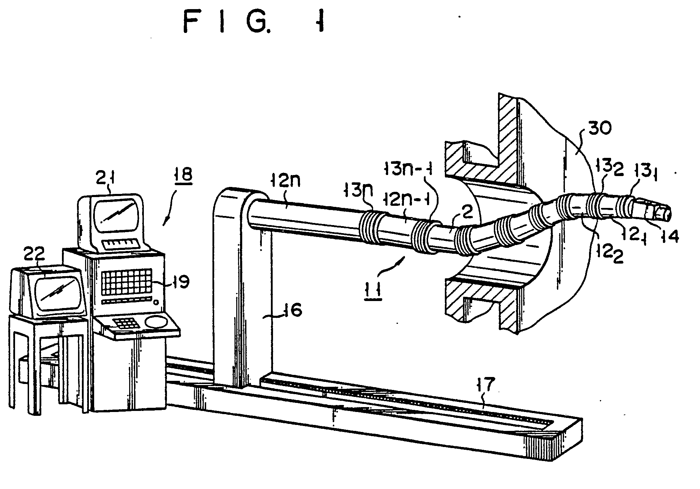

Fig. 1 shows the overall arrangement of a multi-joint arm robot system. A multi-joint arm 11 comprises a plurality of unit arms $12_1$ to $12_n$, and joint $13_1$ to $13_n$ for connecting these unit arms with one another in tandem. An inspection television camera 14 is attached to the fore end of the unit arm $12_1$ and arranged to freely change the optical axis of lens to any direction by means of the fore end joint $13_1$.

The back end unit arm $12_n$ of the multi-joint arm 11 is supported by a movable support 16 which is driven on a rail 17 by a motor. When the movable support 16 moves, the whole of the multi-joint arm 11 also moves accordingly.

A control system 18 for controlling the operation of the multi-joint arm robot, which comprises the multi-joint arm 11 and the movable support 16, mainly consists of a computer 19, in combination with a CRT display means 21 for displaying a model of solids and a monitor television receiver 22 for reproducing images picked up by the television camera 14.

Each of the joints $13_1$ to $13_n$ has a driving mechanism described later. These driving mechanisms are controlled by the control system 18, to change the joint angle of each of the joints. More specifically, the two adjacent unit arms can freely change their relative positions in a three dimensional space. An encoder is provided to detect the joint angle of each of the joints, that is, the rotating angle of a motor which drives its corresponding joint. The motor for moving the movable support 16 is driven by the control system 18 while the distance of the moving support 16 is being controlled. An encoder is arranged in the movable support 16 to detect the travelling distance of the moving support 16, i.e., to detect the rotating angle of the motor.

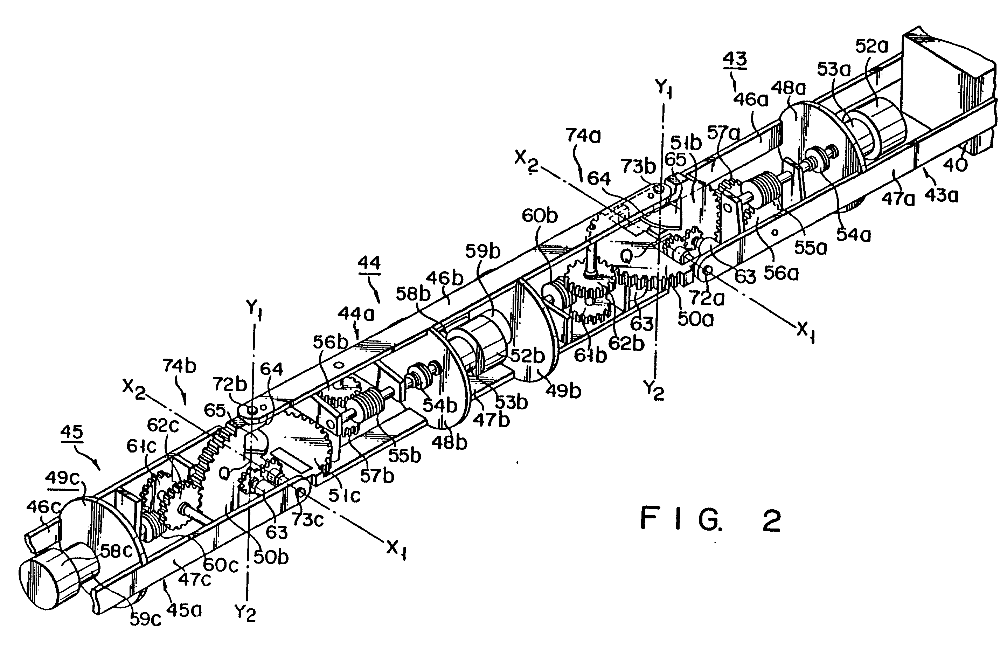

An example of arrangement of the multi-joint arm 11, which is disclosed by the above-mentioned Patent Application, will be described with reference to Fig. 2.

A plurality of unit arms 43, 44, 45 are connected by joint sections 74a and 74b, each being arranged at one end of each of the unit arms. A support member 43a of the unit arm 43 consisting of elongated support plates 46a and 47a and a support disc 48a is arranged on a base 40. A guide member 50a shaped like a symmetrically-divided spur wheel is rotatably attached to the foremost end of the elongated support plates 46a, 47a by pins 72a. With the unit arm 44, a support member 44a includes two support discs 48b, 49b and two elongated support plates 46b, 47b fixed to the support discs 48b, 49b at the center thereof. A guide member 51b shaped like a symmetrically-divided spur wheel is rotatably attached to the back ends of the elongated support plates 46b, 47b by pins 73b. A guide member 51c is rotatably attached to the front ends of the elongated support plates 46b and 47b by pins 72b. The unit arms 45 has the same construction as the unit arm 44 but the unit arm 44 turns by 90 degrees around the longitudinal axis thereof. More specifically, the elongated support plates 46b and 47b are arranged opposite to each other in the vertical direction in the unit arm 44, while elongated support plates 46c and 47b are arranged opposite to each other in the horizontal direction in the unit arm 45. The elongated support plates 46c and 47c of the support member 45a are fixed to two support discs (only a support disc 49c is shown in Fig. 2) and the guide member 51c is freely rotatably attached to the back ends of the elongated support plates 46c and 47c by pins 73c. The guide members 50a and 51b or 50b and 51c in each of the joint sections are fixed in such a way that their rotation axes cross each other. The unit arms 43 and 44 or 44 and 45 can thus move relative to each other in each of the joint sections, taking the axes X1—X2 and Y1—Y2 as their rotation axes.

A driver means for driving the guide member 51b, which means consists of a motor 52a, a reduction gear 53a, a joint 54a, a worm 55a, a worm wheel 56a and a spur wheel 57a, is so arranged on the support member 43a in the unit arm 43 as to transmit the rotation of the motor 52a to the guide member 51b. Similarly, a driver means for driving the guide member 50a, which means consists of a motor 58b, a reduction gear 59b, a joint (not shown), a worm 60b, a worm wheel 61b and a spur wheel 62; and another driver means for driving the guide member 51c, which means consists of a motor 52b, a reduction gear 53b, a joint 54b, a worm 55b, a worm wheel 56b and a spur wheel 57b, are arranged on the support member 44a in the unit arm 44. A driver means for driving the guide member 50b and consisting of a motor 58c, a reduction gear 59c, a joint (not shown), a worm 60c, a worm wheel 61c and a spur wheel 62c, is also arranged on the support member 45a in the unit arm 45. Due to the rotation of the motors 52a and 58b, therefore, the unit arm can move in any direction in relation to the unit arm 44 fixed to the base 40. Due to the rotation of the motors 52b and 58c, the unit arm 45 can also move in any direction relative to the unit arm 44. The rotating angle (or rotating position) of the unit arm in each of the joint sections can be detected by potentiometers 63. Each of the joint sections is provided with a limit switch to stop the rotation of the motor when the relative rotating angle between the unit arms reaches a limit value (or maximum rocking angle). This limit switch has a sensor 64 attached to the underside of the elongated support plate 46b, for example, with its detecting direction directed vertically downward, and a fan-like indication plate 65 fixed horizontally to the side of the guide member 50b and 51b.

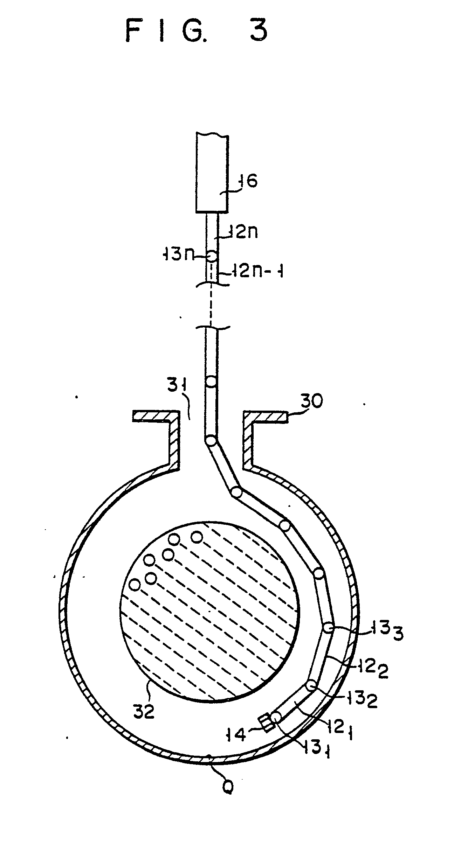

Fig. 3 shows a case wherein the above-mentioned multi-joint arm is employed to inspect the inside of the heat exchanger of the nuclear apparatus. The tank 30 has an opening 31, through which a point Q to be inspected cannot be seen, due to the group of pipes 32 of the heat exchanger. A space in which an appliance such as the television camera can move exists between the inner wall of the tank 30 and the gripped pipes 32. By sliding the movable support 16 while controlling the joint angle of each of the joint sections of the multi-joint arm 11, the fore end of the multi-joint arm 11 can be guided to a position at which the poin Q an be inspected, as shown in Fig. 3.

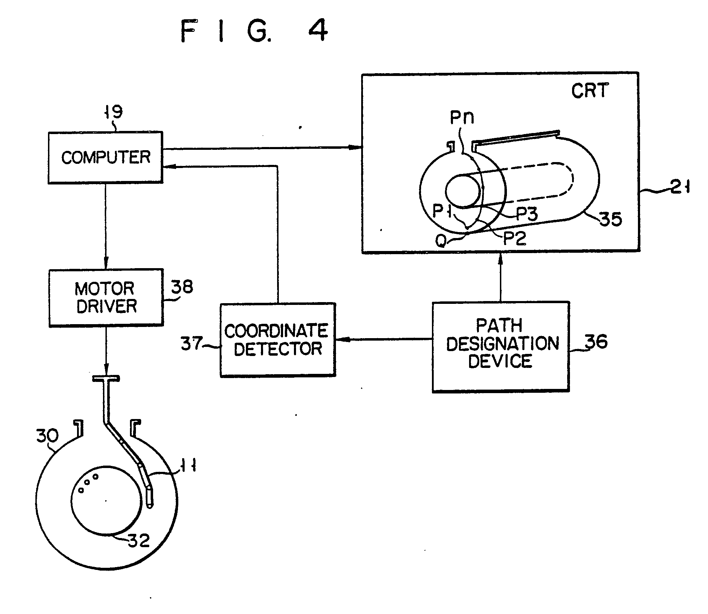

The control system according to the present invention may be described with reference to Fig. 4.

According to a control system for use with the multi-joint arm of the present invention, an environmental model relating to the heat exchanger tank 30, pipes 32 and multi-joint arm 11 is previously built by the computer 19, based on their shapes and dimensions, which can be obtained from their design drafts. The technique of solid modeling is to build a complicated three dimensional object by combining three dimensional objects (or basic shape elements, which are also called primitives) such as a circular cylinder, rectangular parallepiped, circular cone and sphere with one another, using the computer. A model 35 of a three dimensional geometrical shape, which is built by the computer 19 to represent an environment including the tank 30 and grouped pipes 32 is displayed, as an opened-up view of projection chart, on the display (or CRT display) 21.

The operator inputs points $P_1$, $P_2$, $P_3$, ..., $P_n$ along which the multi-joint arm 11 is to be guided and displayed on the CRT display 21, the points being inputted from the opening of the tank 30 to the goal Q. These points on the path is inputted by using an input device 36 such as a tablet, digitizer or light pen. The coordinates (X, Y, Z) of each point designated on the model of three dimensional solids are detected by a coordinate detector circuit 37. The computer 19 interpolates the inputted points, which have been designated on the CRT display 21, by a line, whereby the operator can confirm that the multi-joint arm does not come into contact with any of the pipes on the tank as it moves along the path.

The computer 19 derives a path equation from the coordinates of the inputted points, the path equation representing the path along which the multi-joint arm 11 is to be guided. The computer 19 further calculates the joint angle at each of the joint sections in such a way that the joint sections are put into the path when the movable support 16 moves at regular intervals (feed pitch). In addition, the computer 19 instructs a motor driver circuit 38 to move the movable support 16 at regular intervals, and to drive each of the joint sections to the calculated joint angle. This step is repeated until the multi-joint arm 11 is guided to the goal Q.

According to the present invention, the working site can be displayed, as a three dimensional model, on the CRT display 21. Therefore, the operator can drive the multi-joint arm after simulating whether or not the multi-joint arm comes into contact with any of the obstacles, thus allowing the multi-joint arm to be safely guided to the target. More specifically, the present invention enables the actual movement of the multi-joint arm to completely correspond to the movement designated on the CRT display, so that its movement and successive movement can be learned and anticipated by the CRT display, even when its actual movement is shielded from the operator. In addition, the operator need only create the environmental model of work side, and designate the path on which the multi-joint arm is to be guided. Therefore, the operator can easily drive the multi-joint arm without any specialized skill, even at a site which is shielded from the operator.

### Claims

1. A control system for a multi-joint arm robot including a plurality of unit arms ($12_1$ to $12_n$) connected in tandem by joint sections ($13_1$ to $13_n$), each of said unit arms being provided with motor means for controlling the joint angle of each of the joint sections; and a movable support (16) supporting said multi-joint arm, and having motor means for driving said movable support, to move said multi-joint arm;

said control system comprising:

display means (21) for displaying, as a model of three dimensional solids, the side to which the multi-joint arm is to be moved, and multi-joint arm;

path designating means (36, 37) for designating the path of the multi-joint arm on the model of a three dimensional solids displayed on the display means (21);

computer means responsive to said path designation means for calculating the joint angle of each of the joint sections, in such a way that the joint sections ($13_1$ to $13_n$) of the multi-joint arm (11) are put on the designated path when said movable support (16) is moved at regular intervals; and

motor driving means (38) for driving said motor means of said movable support (16) and said multi-joint arm (11), in response to said computer means (19), to move said movable support at regular intervals and, to drive each of said joint sections of said multi-joint arm to the calculated joint angle.

2. A control system according to claim 1, characterized in that said path designating means (36) designates the path of said multi-joint arm as discrete points on the model of three dimensional solids displayed on said display means, and supplies coordinate data on each of the inputted discrete points to said computer means (19).

### Patentansprüche

1. Kontrollsystem für einen mehrfach gegliederten Roboterarm mit einer Anzahl von Armeinheiten ($12_1$—$12_n$), die über Gelenkteile ($13_1$—$13_n$) hintereinander geschaltet und die jeweils mit Motoreinrichtungen zum Steuern des Gelenkwinkels jedes Gelenkteils versehen sind, und mit einem den mehrfach gegliederten Arm tragenden, bewegbaren Träger (16) mit Motoreinrichtung(en) für den Antrieb des bewegbaren Trägers zum Bewegen des mehrfach gegliederten Arms, umfassend (gekennzeichnet durch)

eine Anzeigeeinrichtung (21) zum Darstellen, als ein Modell dreidimensionaler fester Körper (solids), der Stelle, zu welcher der mehrfach gegliederte Arm zu bewegen ist, sowie des mehrfach gegliederten Arms,

eine Bahnbezeichnungseinrichtung (36, 37) zum Bezeichnen der Bahn des mehrfach gegliederten Arms auf dem Modell eines auf der Anzeigeeinrichtung (21) wiedergegebenen dreidimensionalen festen Körpers,

eine auf die Bahnbezeichnungseinrichtung ansprechende Rechnereinrichtung zum Berechnen des Gelenkwinkels jedes Gelenkteils in der Weise, daß die Gelenkteile ($13_1$—$13_n$) des mehrfach gegliederten Arms (11) auf die bezeichnete Bahn (oder Strecke) bringbar sind, wenn der bewegbare Träger (16) in regelmäßigen Intervallen bewegt wird, und

eine Motoransteuereinrichtung (38) zum Ansteuern der Motoreinrichtungen des bewegbaren Trägers (16) sowie des mehrfach gegliederten Arms (11) nach Maßgabe der Rechnereinrichtung (19), um den bewegbaren Träger in regelmäßigen Intervallen zu bewegen und die einzelnen Gelenkteile des mehrfach gegliederten Arms zum berechneten Gelenkwinkel zu bewegen.

2. Kontrollsystem nach Anspruch 1, dadurch gekennzeichnet, daß die Bahnbezeichnungseinrichtung (36) die (Bewegungs-)Bahn des mehrfach gegliederten Arms als diskrete Punkte auf dem auf der Anzeigeeinrichtung wiedergegebenen Modell dreidimensionaler fester Körper bezeichnet und Koordinatendaten für jeden der eingegebenen diskreten Punkte zur Rechnereinrichtung (19) liefert.

### Revendications

1. Système de commande pour un robot à bras à articulations multiples comprenant plusieurs bras unitaires ($12_1$ à $12_n$) reliés en tandem par des sections d'articulations ($13_1$ à $13_n$), chacun desdits bras unitaires étant muni d'un dispositif à moteur pour commander l'angle d'articulation de chacune des sections d'articulation, et d'un support mobile (16) supportant ledit bras à articulations multiples et comprenant un dispositif à moteur pour entraîner ledit support mobile afin de déplacer ledit bras à articulations multiples, ledit système de commande comportant: un dispositif d'affichage (21) destiné à visualiser sous forme d'une modèle solide à trois dimensions le lieu vers lequel le bras à articulations multiples doit être déplacé et un bras à articulations multiples; un dispositif de désignation de trajet (36, 37) destiné à spécifier le trajet du bras à articulations multiples sur le modèle d'un solide à trois dimensions visualisé sur le dispositif d'affichage (21); un dispositif calculateur réagissant audit dispositif de désignation de trajet en calculant l'angle d'articulation de chacune des sections d'articulation de manière que les sections d'articulation ($13_1$ à $13_n$) du bras à articulations multiples (11) soient amenées sur le trajet spécifié quand ledit support mobile (16) est déplacé à des intervalles réguliers; et un dispositif d'attaque de moteur (38) destiné à commander ledit dispositif à moteur dudit support mobile (16) et dudit bras à articulations multiples (11) en réponse audit dispositif calculateur (19) pour déplacer ledit support mobiel à intervalles réguliers et pour entraîner chacune desdites sections d'articulations dudit bras à articulations multiples à l'angle d'articulation calculé.

2. Système de commande selon la revendication 1, caractérisé en ce que ledit dispositif de désignation de trajet (36) spécifie le trajet dudit bras à articulations multiples sous forme de points discrets sur le modèle du solide à trois dimensions visualisé sur ledit dispositif d'affichage, et fournit des données de coordonnées sur chacun des points discrets introduits audit dispositif calculateur (19).

# F I G. 1

F I G. 2

0 107 968

# F I G. 3

# F I G. 4